# EUROPÄISCHE PATENTSCHRIFT

(11) **EP 2 557 971 B1**
(45) Veröffentlichungstag und Bekanntmachung des Hinweises auf die Patenterteilung: **04.06.2014**
(21) Anmeldenummer: 11715486.4
(22) Anmeldetag: 14.04.2011
(51) Int. Cl.: A47J 27/08

(54) **DRUCKDECKEL FÜR EINEN KOCHTOPF SOWIE DAMIT VERSEHENER KOCHTOPF**
PRESSURE LID FOR A COOKING POT AND COOKING POT PROVIDED THEREWITH
COUVERCLE À PRESSION POUR MARMITE DE CUISSON, ET MARMITE DE CUISSON POURVUE D'UN TEL COUVERCLE

(30) Priorität: 14.04.2010 DE 102010014988
(43) Veröffentlichungstag der Anmeldung: 20.02.2013
(73) Patentinhaber: Gero Vertriebs GmbH, 42369 Wuppertal (DE)
(72) Erfinder: DE BASTOS REIS PORTUGAL, Mario, P-4520-249 Santa Maria Da Feira (PT)
(74) Vertreter: Lippert, Stachow & Partner
(86) Internationale Anmeldenummer: PCT/EP2011/055878
(87) Internationale Veröffentlichungsnummer: WO 2011/128396

(56) Entgegenhaltungen:
- CN-A- 1 565 321
- DE-B3-102004 056 463
- US-A1- 2005 166 908

## Beschreibung

Die Erfindung betrifft einen Druckdeckel für einen Kochtopf umfassend eine Deckelscheibe, ein Griffelement, Klemmsegmente, die einander gegenüberliegend an der Deckelscheibe angeordnet sind, wobei die Klemmsegmente radialbeweglich zur Achse der Deckelscheibe (Deckelachse) zwischen einer Sperrposition und einer Entsperrposition bewegbar sind, ein erstes Betätigungsorgan (Sperrorgan) zum Antrieb einer Sperrbewegung der Klemmsegmente, ein zweites Betätigungsorgan (Entsperrorgan) zum Antrieb einer Entsperrbewegung der Klemmsegmente, sowie eine Getriebebaugruppe, über welche die Betätigungsorgane kinematisch mit den Klemmsegmenten gekoppelt sind.

Ein solcher Druckdeckel ist zur Verwendung mit einem passenden Kochtopf hergerichtet, um diesen dampfdicht zu verschließen. Ein entsprechender Kochtopf mit Druckdeckel ist Teil der Erfindung.

Aus der DE 295 10 990 U1 ist ein gattungsgemäßer Druckdeckel bekannt. Charakteristisch ist, dass an einem zentralen Griff voneinander separiert zwei Betätigungsorgane angeordnet sind. Das erste Betätigungsorgan (Sperrorgan), welches die dampfdichte Anbringung des Druckdeckels an einem Kochtopf, mit anderen Worten das dampfdichte Schließen des Kochtopfs bewirkt, ist ein parallel zur Achse des Druckdeckels bewegbarer Knopf. Das zweite Betätigungsorgan, welches dem Lösen des Druckdeckels vom Kochtopf, respektive dem Öffnen des Kochtopfs dient, ist relativ zur Achse des Druckdeckels in radialer Richtung angeordnet und in radialer Richtung bewegbar.

Die US 2005/0166908 A1 offenbart einen Druckdeckel mit Betätigungselementen, die senkrecht zueinander bewegbar sind.

Es sind andere, nicht gattungsgemäße Druckdeckel bekannt, die lediglich ein einziges Betätigungsorgan aufweisen, beispielsweise aus der eigenen früheren WO 2009/098317 A1.

Bei dem aus der DE 295 10 990 U1 bekannten Druckdeckel ist im Wesentlichen der zum Schließen vorgesehene Knopf für einen Benutzer gut sichtbar. Dies, weil der Knopf oben am Griffelement aufgenommen ist. Der Knopf ist konzentrisch zur Achse des Druckdeckels bewegbar. Das zum Öffnen vorgesehene zweite Betätigungsorgan ist seitlich am Griffelement für einen Benutzer schlechter sichtbar. Dies erschwert es für den Benutzer, die Funktionen des Druckdeckels visuell erfassen zu können und richtig zu bedienen. Je nach dem, aus welcher Richtung ein Benutzer den Druckdeckel betrachtet, ist das radial bewegbare Betätigungsorgan überhaupt nicht zu sehen.

Der Erfindung liegt die Aufgabe zugrunde, die Bedienbarkeit eines mit zwei Betätigungselementen ausgerüsteten Druckdeckels zu vereinfachen und zu verbessern.

Erfindungsgemäß wird dies dadurch gelöst, dass das erste Betätigungsorgan und das zweite Betätigungsorgan nebeneinander an dem Griffelement angeordnet sind, und dass beide Betätigungsorgane in einer Richtung parallel zur Deckelachse bewegbar in dem Griffelement gelagert sind.

Für den Benutzer sind bei dem vorgeschlagenen Druckdeckel zwecks Klarheit der Bedienung stets beide Betätigungsorgane an der Oberseite des Druckdeckels sichtbar. Der Benutzer erwartet zwei Funktionen, nämlich das Öffnen und das Schließen. Diese Funktionen ordnet er den Betätigungsorganen problemlos richtig zu. Selbst ohne Beschriftung oder entsprechende Symbole, kann der Benutzer durch Druck auf ein einziges der Betätigungsorgane testen, ob dieses die Klemmsegmente aufeinander zu oder voneinander weg bewegt, und somit, ob es zum Öffnen oder Schließen eines Kochtopfs dient.

Die Klemmsegmente sind vorzugsweise einander diametral gegenüberliegend angeordnete kreissegmentförmige Schienen. An jeder Schiene ist ein zum Kreismittelpunkt gerichtetes Mitnahmeorgan vorgesehen. Die Krümmung der Schienen ist an den Umfangsrand des Kochtopfes angepasst. Jede Schiene weist einen U-förmigen Querschnitt auf, der so gestaltet ist, dass er einen Umfangsrand des Kochtopfes umfassen kann.

Zweckmäßig weist die Getriebebaugruppe ein Antriebselement auf, das zwischen zwei Endlagen bewegbar ist. Die Gestaltung eines zwischen zwei Endlagen bewegbaren Antriebselements ist für den Benutzer besonders einfach per Finger bedienbar. Vorzugsweise ist das Antriebselement so gestaltet, dass seine Antriebsbewegung mittels formschlüssigen Eingriffs des Klemmsegments mit dem Antriebselement in eine translatorische Sperr- beziehungsweise Entsperrbewegung des Klemmsegments umwandelbar ist.

Das Antriebselement der Getriebebaugruppe kann als Wippelement ausgebildet sein und es kann drehfest mit dem Wippelement ein Zahnradelement vorgesehen sein. Das Zahnrad ist entweder mit dem Wippelement verbunden und austauschbar oder es ist einstückig mit dem Wippelement als integrales Bauteil gestaltet.

Das Wippelement kann einfacherweise als Zylindersegment ausgebildet sein. Beide seitlichen geraden Kanten des Zylindersegments eignen sich hervorragend als Betätigungskante, um das Wippelement mittels einer äußeren auf eine der Betätigungskanten wirkenden Kraft in eine Wippbewegung zu versetzten und von einer Endposition in die andere zu wippen. Jedes der beiden Betätigungsorgane ist so angeordnet, dass es direkt auf eine der Betätigungskanten eine Druckkraft ausüben kann. Auf diese Weise wird die Wippbewegung in die eine oder andere Wipprichtung ausgelöst.

Für die Verwindungssteifigkeit ist es günstig, wenn anstelle eines Zylindersegments ein Vollzylinder als Wippe vorgesehen ist, wobei der Vollzylinder mit einem Angriffsbereich für das erste Betätigungsorgan und einem Angriffsbereich für das zweite Betätigungsorgan versehen ist. Da ein Vollzylinder keine geraden Betätigungskanten aufweist, muss für die beiden Betätigungsorgane, welche auch bei dieser Ausführungsform die Wippbewegung auslösen, eine andere Angriffsmöglichkeit geboten werden. Als Angriffsbereich für ein Betätigungsorgan kann beispielsweise ein Fenster in den Vollzylinder geschnitten werden. So entsteht eine Fensterkante, die wiederum als Betätigungskante benutzbar ist. Gegen die Fensterkante kann ein Betätigungsorgan gedrückt werden, um die Wippbewegung auszulösen.

Die Wippbewegung kann innerhalb eines Winkelbereichs von 0° bis 180° erfolgen, vorzugsweise innerhalb eines Winkelbereichs von 0° bis 90°.

Eine Alternative sieht vor, dass das Wippelement als Platte ausgebildet ist. Zu beiden Seiten der Wippachse weist die Platte einen Bereich auf, der mit einem der Betätigungsorgane zusammenwirkt. Wenn das entsprechende Betätigungsorgan auf den jeweiligen Plattenbereich drückt, wird dadurch die Wippbewegung ausgelöst.

Damit die Wippplatte ihre Wippbewegung in die Klemmsegmente überträgt, ist sie mit einem integrierten Zahnrad beziehungsweise Zahnradsegment versehen. Bei dieser Ausführungsform wirkt das Zahnrad beziehungsweise Zahnradsegment nur mit einem der Klemmsegmente formschlüssig zusammen. Das Klemmsegment wird davon radial zur Deckelachse bewegt. Das zweite Klemmsegment ist über ein Zahnrad mit dem ersten Klemmsegment gekoppelt. Das zwischengeschaltete Zahnrad kehrt die Bewegungsrichtung um, so dass das zweite Klemmsegment sich symmetrisch zum ersten Klemmsegment bewegt.

Jedem der vorbeschriebenen Wippelemente kann eine Endlagenfeder zugeordnet sein. Mit dieser sind zwei Endlagen des Wippelements gesichert, wobei sich zwischen beiden Endlagen eine Position labilen Gleichgewichts des endlagengefederten Wippelements befindet. Dadurch muss ein Betätigungsorgan zum Öffnen oder Schließen nicht über den gesamten Wippweg mitbewegt werden. Es genügt, das Betätigungsorgan solange zu drücken, bis die Endlagenfeder ihre maximale Federspannung erreicht hat. Dies ist dann der Fall, wenn das endlägengefederte Wippelement sich in der labilen Gleichgewichtsposition zwischen den Endlagen befindet. Die Weiterbewegung des Wippelements in derselben Richtung erfolgt selbsttätig durch die Endlagenfeder, welche die in ihr gespeicherte Federenergie wieder abgibt und damit das Wippelement antreibt.

Eine besondere Ausführungsform sieht eine formschlüssige Kopplung zwischen dem Sperrorgan und dem Entsperrorgan vor. Durch diese Kopplung beziehungsweise kinematische Verbindung der Betätigungsorgane bewegt das Sperrorgan, wenn es gedrückt wird, simultan das Entsperrorgan in die entgegengesetzte Richtung mit. Umgekehrt gilt das Gleiche. Diese Maßnahme erhöht für den Benutzer die Erkennbarkeit, ob der Druckdeckel gerade seine offene oder geschlossene Betriebsposition einnimmt. Die Unterstützung basiert auf der stets an der Oberseite des Druckdeckels sichtbaren Stellung der Klemmsegmente. Diese befinden sich entweder nah am Rand des Druckdeckels (geschlossen) oder in gewissem Abstand zu diesem (geöffnet).

Eine weiter zweckmäßige Konstruktion sieht vor, dass das Antriebselement der Getriebebaugruppe einen Antriebskeil aufweist, der mit zwei Schrägflächen versehen ist, und dass jede Schrägfläche mit einer an dem jeweiligen Klemmsegment vorgesehenen Schrägfläche zusammenwirkt. Vorzugsweise ist in dem Griffelement ein zentral angeordnetes Sperrorgan und konzentrisch um dieses das Entsperrorgan vorgesehen. Bei dieser besonderen Konstruktion ist das Entsperrorgan dasjenige, welches vorzugsweise per Muskelkraft betätigt wird. Im Unterschied dazu erfolgt die Sperrbewegung im Wesentlichen per Federkraft, welche von der Gegendruckfeder bereitgestellt wird.

Zum Entsperren (Öffnen) muss der Benutzer auf das Entsperrorgan drücken. Dadurch wird der Antriebskeil in Richtung Kochtopfboden bewegt. Wegen der Schrägflächen des Antriebskeils wird seine Vorwärtsbewegung umgewandelt in eine Querbewegung der Klemmsegmente, welche diese auseinanderbewegt.

Das Entsperrorgan kann direkt mit dem Antriebskeil verbunden oder einstückig mit diesem ausgeführt sein.

Um die Reibung zu reduzieren, können Wälzkörper zwischen jeder Schrägfläche des Antriebskeils und den zugeordneten Schrägflächen der Klemmsegmente angeordnet sein.

Damit die umgekehrte Sperrbewegung ausgeführt werden kann, ist dem Entsperrorgan eine Gegendruckfeder zugeordnet und außerdem ist eine Blockiereinrichtung vorgesehen, mit der das Entsperrorgan solange im gespannten Zustand gegen den die Kraft der Gegendruckfeder arretierbar ist, bis die Blockiereinrichtung gelöst wird.

Um einen Kochtopf mit dem Druckdeckel zu schließen, müssen die Klemmsegmente aufeinander zu bewegt werden, zu diesem Zweck muss der Antriebskeil entgegen der Entsperrrichtung bewegt werden. Dies ist jedoch nur möglich, wenn die oben erwähnte Blockiereinrichtung gelöst wird. Diese wird einfacherweise durch manuellen Druck auf das zentrale Sperrorgan gelöst. Eine Wegnahme des manuellen Druckes bewirkt, dass die Gegendruckfeder den Antriebskeil vom Kochtopf weg nach oben bewegt. Gemeinsam mit diesem wird auch das Entsperrorgan mit dem darin angeordneten Sperrorgan nach oben bewegt.

Das beschriebene Zurückweichen des Antriebskeils erlaubt es den Klemmsegmenten, wieder aufeinander zu bewegt zu werden. Zweckmäßig ist eine Sperrfeder zur Unterstützung der Sperrbewegung jedes Klemmsegments vorgesehen.

Überdies kann eine Tastfeder vorgesehen sein, mit der das Sperrorgan beziehungsweise das Entsperrorgan nach jeder Betätigung in eine Neutralposition bewegbar ist. Dadurch bietet der Druckdeckel stets eine gleichmäßige Gestalt. Er nimmt nach jeder Betätigung wieder dieselbe (neutrale) ästhetische Form an.

Die zugrundeliegende Aufgabe wird ebenfalls mit einem Kochtopf gelöst, der mit einem der vorbeschriebenen Druckdeckel versehen und zur Verwendung zusammen mit diesem hergerichtet ist. Der Kochtopf weist einen Umfangsrand auf der mit den Klemmsegmenten des Druckdeckels zusammenpasst. Vorzugsweise kann der Druckdeckel relativ zur Mittelachse des Kochtopfes in beliebiger Drehposition auf den Kochtopf aufgesetzt und dampfdicht befestigt werden.

Nachstehend sind Ausführungsbeispiele der Erfindung in einer Zeichnung beispielhaft dargestellt und anhand mehrerer Figuren detailliert beschrieben. Es zeigen:
- Fig. 1: eine Seitenansicht eines Druckdeckels und eines passenden Kochtopfes, wobei der Druckdeckel geschlossen ist (Sperrposition),
- Fig. 2: eine Draufsicht auf den Druckdeckel gemäß Fig. 1 in Sperrposition,
- Fig. 3: eine Detailansicht gemäß III-III in Fig. 2,
- Fig. 4: eine Draufsicht auf den Druckdeckel in geöffneter Position (Entsperrposition),
- Fig. 5: eine Detailansicht zweier Betätigungsorgane, nämlich Sperrorgan und Entsperrorgan, in geschlossener Position,
- Fig. 6: eine Detailansicht zweier Betätigungsorgane, nämlich Sperrorgan und Entsperrorgan, in geöffneter Position,
- Fig. 7: eine Seitenansicht, wie Fig. 1 mit einer alternativen Getriebebaugruppe,
- Fig. 8: eine Seitenansicht, wie Fig. 1 mit einer weiteren alternativen Getriebebaugruppe mit einer formschlüssigen Kopplung der beiden Betätigungsorgane,
- Fig. 9: eine Seitenansicht, wie Fig. 8 mit einer alternativen Getriebebaugruppe mit formschlüssig gekoppelten Betätigungsorganen,
- Fig. 10: eine Seitenansicht eines Druckdeckels mit dazu passendem Kochtopf in geöffneter Position, wobei der Druckdeckel eine weitere alternative Getriebebaugruppe aufweist,
- Fig. 11: eine Seitenansicht des Druckdeckels gemäß Fig. 10 in geschlossener Position,
- Fig. 12: eine Draufsicht auf den Druckdeckel gemäß den Figuren 10 und 11 in geschlossener Position,
- Fig. 13, 13a, 13b: mehrere Ansichten des Wippelements gemäß den Figuren 10 bis 12 mit zugehöriger Endlagenfeder,
- Fig. 14: eine Seitenansicht eines Druckdeckels, dessen Getriebebaugruppe einen Antriebskeil zwecks Öffnen der Klemmsegmente aufweist, wobei sich die Klemmsegmente in ihrer Entsperrposition befinden,
- Fig. 15: eine Seitenansicht der Getriebebaugruppe gemäß Figur 14 mit den Klemmsegmenten in ihrer Sperrposition,
- Fig. 16: eine Draufsicht auf den Druckdeckel gemäß Fig. 15.

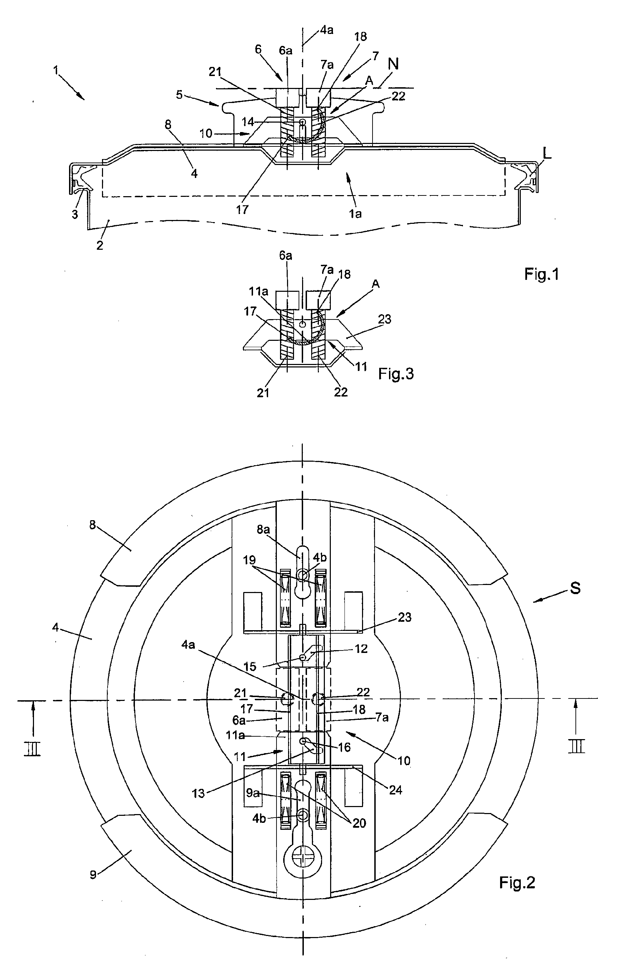

Die Figuren 1 bis 4 zeigen ein erstes Ausführungsbeispiel eines Druckdeckels 1. In Fig. 1 ist unterhalb des Druckdeckels 1 auch ein Kochtopf 2 dargestellt, der einen passenden Umfangsrand 3 aufweist, um den Druckdeckel 1 dampfdicht an dem Kochtopf 2 anbringen zu können. Aus dem Kochtopf 2 und dem Druckdeckel 1 kann auf diese Weise ein Schnellkochtopf gebildet werden. Ungeachtet dessen kann der Kochtopf 2 auch mit einem konventionellen Deckel benutzt werden, der keine dampfdichte Verbindung schafft.

Der Druckdeckel 1 umfasst eine Deckelscheibe 4 mit einer Deckelachse 4a, ein Griffelement 5 mit zwei Betätigungsorganen, nämlich einem Sperrorgan 6 in Form eines Sperrknopfes 6a und einem Entsperrorgan 7 in Form eines Entsperrknopfes 7a. Es sind einander diametral gegenüberliegende Klemmsegmente 8 und 9 vorgesehen, von denen in Fig. 1 nur das Klemmelement 8 zu sehen ist, sowie eine Getriebebaugruppe 10, welche die Betätigungsorgane 6 und 7, also Sperrknopf 6a und Entsperrknopf 7a kinematisch mit den Klemmsegmenten 8 und 9 koppelt.

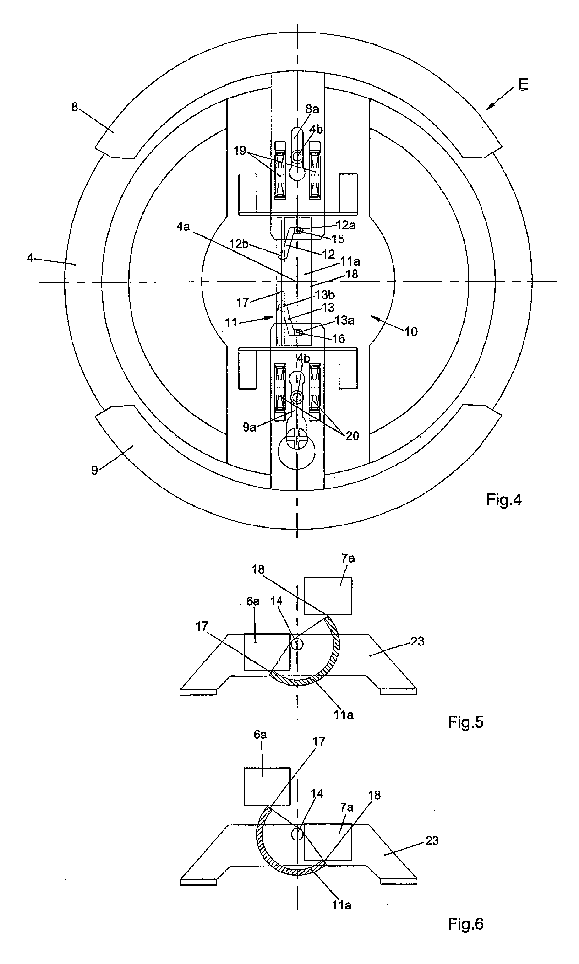

Die Klemmsegmente 8 und 9 können eine Sperrposition S einnehmen, in der sie, wie in Fig. 2 dargestellt, zueinander bewegt sind. Die Sperrposition S ist vorgesehen, um den Druckdeckel 1 an dem Umfangsrand 3 eines Kochtopfes 2 anzubringen und den Kochtopf 2 dampfdicht zu verschließen. Andererseits können die Klemmsegmente 8 und 9 eine in Fig. 4 gezeigte Entsperrposition E einnehmen. In der Entsperrposition E sind sie auseinander bewegt, so dass der Druckdeckel 1 von dem Kochtopf 2 abgenommen werden kann. Dies gilt für alle Ausführungsbeispiele.

In einer Zusammenschau der Figuren 1 bis 4 wird das Funktionsprinzip dieses Ausführungsbeispiels deutlich, nämlich die Ausnutzung einer Schraubenfunktion, um eine geradlinige Bewegung der Klemmsegmente 8 und 9 zu erzeugen. Zu diesem Zweck weist die Getriebebaugruppe 10 als Antriebselement ein Wippelement 11 in Form eines Zylindersegments 11a auf. Das Zylindersegment 11a weist an seiner Zylinderumfangsfläche schraubenlinienförmig angeordnete Führungsnuten 12 und 13 auf. Außerdem ist es innerhalb eines Winkelbereichs von 0° bis 90° zwischen zwei Endlagen A und B um seine Längsachse 14 bewegbar gelagert. In die Führungsnut 12 greift ein an dem Klemmsegment 8 vorgesehener Mitnahmebolzen 15 und in die Führungsnut 13 greift ein an dem Klemmsegment 9 vorgesehener Mitnahmebolzen 16 ein. Auf diese Weise wirkt das Zylindersegment 11a als symmetrischer Antrieb für beide Klemmsegmente 8 und 9, mit dem diese aufeinander zu und voneinander weg bewegbar sind. Die beiden Führungsnuten 12 und 13 sind gegensätzlich gewendelt. Führungsnut 12 ist nach Art eines Linksgewinde und Führungsnut 13 nach Art eines Rechtsgewindes angeordnet.

Die Führungsnut 12 weist abknickende Endbereiche 12a und 12b auf, in denen der Steigungswinkel der Schraubenlinie 0° beträgt. Zwischen den Endbereichen 12a und 12b befindet sich ein Steigungsbereich mit einem Steigungswinkel, der von 0° verschieden ist. Die Endbereiche 12a und 12b schaffen eindeutige Endpositionen, die jeweils den Mitnahmebolzen 15 arretieren. Die Führungsnut 13 ist ebenfalls mit Endbereichen 13a und 13b gestaltet und erfüllt die Arretierfunktion für den Mitnahmebolzen 16 des Klemmsegments 9 gleichermaßen, wie die Führungsnut 12.

Die Wippbewegung des Zylindersegments 11a wird herbeigeführt, indem von außen eine Kraft auf eine der geraden Kanten des Zylindersegments 11a drückt. Eine der geraden Kanten bildet eine Betätigungskante 17, die mit dem Sperrknopf 6a zusammenwirkt, während die andere der geraden Kanten eine Betätigungskante 18 bildet, die mit dem Entsperrknopf 7a zusammenwirkt. Der Sperrknopf 6a und der Entsperrknopf 7a sind in dem Griffelement parallel zur Deckelachse 4a verschiebbar gelagert und so gestaltet, dass sie eine Druckkraft auf die Betätigungskante 17 beziehungsweise die Betätigungskante 18 ausüben können.

Gemäß der Draufsicht in Fig. 2 sind Sperrfedern 19 vorgesehen, welche mit einem Ende jeweils an der Deckelscheibe 4 und mit dem anderen Ende an dem Klemmsegment 8 angebracht sind. In gleicher Weise sind dem Klemmsegment 9 Sperrfedern 20 zugeordnet. Damit die Klemmsegmente 8 beziehungsweise 9 ihre Entsperrposition E erreichen, müssen sie gegen die Federkraft der Sperrfedern 19 und 20 auseinander bewegt werden.

Außerdem ist dem Sperrknopf 6a eine Tastfeder 21 und dem Entsperrknopf 7a eine Tastfeder 22 zugeordnet. Die Tastfedern 21 und 22 halten die beiden Betätigungsorgane stets oben in einer Neutralposition N, wie in Fig. 1 dargestellt.

Wenn die Klemmsegmente 8 und 9 aus der in Fig. 4 gezeigten geöffneten Position in die geschlossene Position bewegt werden sollen, die in Fig. 2 gezeigt ist, reicht es aus, wenn der Benutzer den Sperrknopf 6a aus der in Fig. 3 gezeigten Position solange auf die Betätigungskante 18 des Wippelements 11 drückt, bis beide Mitnahmebolzen 15 und 16 den Endbereich 12a beziehungsweise 13a der Führungsnuten 12 beziehungsweise 13 verlassen und in den Steigungsbereich der jeweiligen Führungsnut gelangen. Ab dann bewirken beziehungsweise unterstützen die Federkräfte der Sperrfedern 19 und 20 die weitere Sperrbewegung der Klemmsegmente 8 und 9 bis die Entsperrposition E erreicht ist. Sobald der Benutzer den Sperrknopf 6a wieder loslässt, wird dieser von der ihm zugeordneten Tastfeder 21 wieder in seine Neutralposition N bewegt.

In der Draufsicht gemäß Fig. 4 sind die beiden Betätigungsorgane Sperrknopf 6a und Entsperrknopf 7a zur Vereinfachung der Darstellung weggelassen worden.

Zwecks Lagerung des Wippelements 11 sind auf der Deckelscheibe 4 zwei Stege 23 und 24 angebracht. Jeder Steg weist ein Lagermittel auf, welches ein Ende des Zylindersegments 11a um dessen Längsachse 14 drehbar aufnimmt.

Zur Führung der Klemmsegmente 8 und 9 sind diese mit einem Führungsmittel versehen, nämlich einer Gleitnut 8a beziehungsweise 9a. An der Deckelscheibe 4 ist je ein Führungsbolzen 4b für jede der Gleitnuten vorgesehen.

Auf der dem Kochtopf 2 zugewandten Innenseite 1a des Druckdeckels 1 ist eine übliche Lippendichtung L angeordnet, welche eine dampfdichte Abdichtung des Kochtopfes 2 gewährleistet.

Fig. 5 zeigt eine Detailansicht eines alternativen Ausführungsbeispiels, bei welchem den Betätigungsorganen, nämlich dem Sperrknopf 6a beziehungsweise dem Entsperrknopf 7a, keine Tastfeder zugeordnet ist. Dies hat zur Folge, dass die Betätigungsorgane stets der Wippbewegung des als Antriebselement vorgesehenen Wippelements 11 folgen und stets Kontakt mit der Betätigungskante 17 beziehungsweise 18 des Wippelements 11 behalten. Diese Funktionalität kann noch dadurch unterstützt werden, dass eine Feder vorgesehen wird, welche den Sperrknopf 6a zur Betätigungskante 17 beziehungsweise den Entsperrknopf 7a zur Betätigungskante 18 hin vorspannt. Der Vorteil dieser Ausführungsform besteht darin, dass die Stellung der Betätigungsorgane für den Benutzer stets sichtbar ist und er schnell erfassen kann, ob die Klemmsegmente 8 und 9 des Druckdeckels 1 gerade ihre Sperrposition S oder ihre Entsperrposition E einnehmen, dass heißt, ob die Klemmsegmente 8 und 9 auseinander oder aufeinander zu bewegt sind. In Fig. 5 sind die Betätigungsorgane in derjenigen Position dargestellt, in welcher die Klemmsegmente 8 und 9 ihre Sperrposition S einnehmen. In Fig. 6 sind die Betätigungsorgane in derjenigen Position dargestellt, in welcher die Klemmsegmente 8 und 9 ihre Entsperrposition E einnehmen.

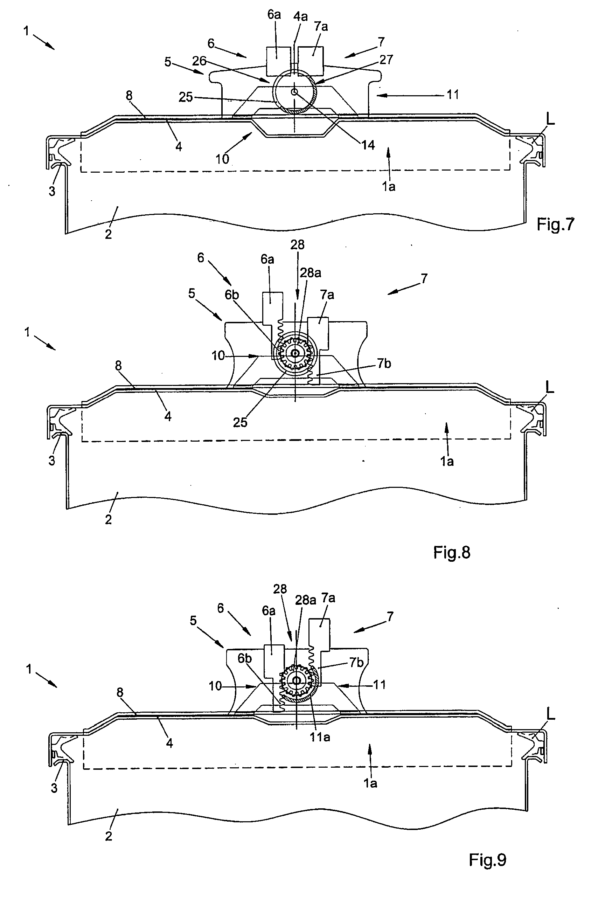

Fig. 7 zeigt ein Ausführungsbeispiel des Druckdeckels 1, dessen Funktion mit dem Ausführungsbeispiel gemäß den Figuren 1 bis 4 weitgehend übereinstimmt. Es unterscheidet sich lediglich durch die Gestaltung des als Antriebselement vorgesehenen Wippelements 11. Anstelle eines Zylindersegments ist das Wippelement hier ein Vollzylinder 25. Die Gestaltung als Vollzylinder 25 verleiht dem Wippelement 11 eine höhere Steifigkeit und Stabilität aufgrund des geschlossenen vollzylindrischen Querschnitts. Dieser unterliegt bei Belastung durch äußere Kräfte einer geringeren Verformung als ein Zylindersegment, das einen offenen Querschnitt aufweist. Besondere Maßnahmen erfordert das vollzylindrische Wippelement 11, weil es als solches keine Betätigungskanten aufweist, an welchen ein Sperrknopf 6a beziehungsweise ein Entsperrknopf 7a eine Druckkraft in das Wippelement 11 einleiten könnte. Daher ist beim Ausführungsbeispiel gemäß Fig. 7 eine Öffnung 26 für den Sperrknopf 6a sowie eine Öffnung 27 für den Entsperrknopf 7a in den Vollzylinder 25 geschnitten. Die Öffnungen weisen Kanten auf, so dass eine Kante als Betätigungskante 17 für den Sperrknopf 6a und eine andere Kante als Betätigungskante 18 für den Entsperrknopf 7a dienen kann. Alternativ kann für beide Betätigungsorgane 6a und 7a eine einzige große Öffnung mit entsprechenden Betätigungskanten vorgesehen sein.

Ein weiteres Ausführungsbeispiel eines Druckdeckels zeigt die Seitenansicht gemäß Fig. 8. In dieser ist im Wesentlichen das Funktionsprinzip der Getriebebaugruppe 10 dargestellt. Die Besonderheit dieses Ausführungsbeispiels besteht darin, dass die Betätigungsorgane Sperrknopf 6a und Entsperrknopf 7a kinematisch in Verbindung stehen. Zu diesem Zweck ist eine formschlüssige Kopplung 28 vorgesehen. Einfacherweise besteht die formschlüssige Kopplung 28 aus einem Zahnrad 28a, welches in Eingriff steht einerseits mit Zähnen 6b, die an dem Sperrknopf 6a vorgesehen sind und andererseits mit Zähnen 7b, die an dem Entsperrknopf 7a vorgesehen sind. Drückt der Benutzer den Sperrknopf 6a wird dadurch das Zahnrad 28a in eine Drehbewegung versetzt und das Zahnrad 28a bewegt seinerseits den Entsperrknopf 7a relativ zum Sperrknopf 6a in entgegengesetzter Richtung. Drehfest mit dem Zahnrad 28a verbunden ist ein als Antriebselement vorgesehenes Wippelement 11, welches hier als Vollzylinder 25 ausgebildet ist. In dem Vollzylinder 25 sind schraubenlinienförmig angeordnete Führungsnuten vorgesehen, in welche Mitnehmerbolzen von Klemmsegmenten eingreifen, wie beim vorherigen Ausführungsbeispiel. Die Funktion der Führungsnuten und Mitnehmerbolzen ist mit der Funktion im Ausführungsbeispiel gemäß den Figuren 1 bis 4 identisch.

Das gleiche Prinzip der formschlüssigen Kopplung 28 zwischen Sperrknopf 6a und Entsperrknopf 7a ist auch im Ausführungsbeispiel gemäß Fig. 9 vorgesehen. Dieses unterscheidet sich von dem Ausführungsbeispiel gemäß Fig. 8 lediglich dadurch, dass das als Antriebselement vorgesehene Wippelement 11 aus einem Zylindersegment 11a besteht.

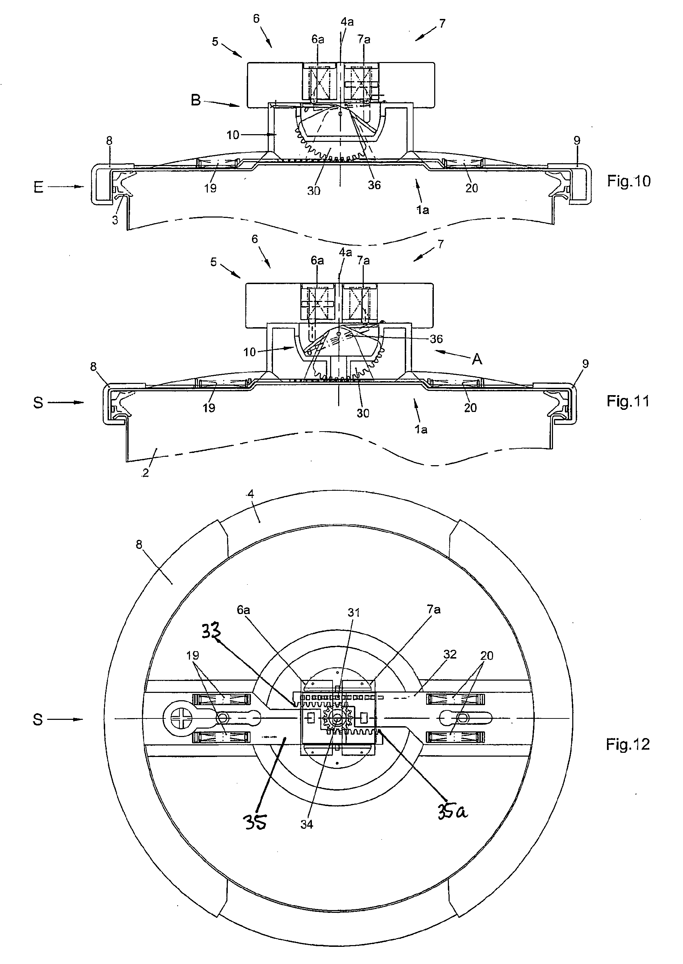

Eine andere Konstruktion eines Druckdeckels 1 ist in den Figuren 10 bis 12 dargestellt. Dieses Ausführungsbeispiel verzichtet auf ein Wippelement, welches nach dem Prinzip der schraubenlinienförmigen links/rechst Führungsnuten eine symmetrische Bewegung auf die Klemmsegmente überträgt. Stattdessen ist als Antriebselement ein Wippelement vorgesehen, das blattförmig ausgebildet ist. Das Wippblatt 29 weist einen V-förmigen Knick mit einem stumpfen V-Winkel von ca. 135° auf. Drehfest an dem Wippblatt 29 angeordnet ist ein Zahnradsegment 30. Die Zähne des Zahnradsegments 30 greifen formschlüssig in eine Lochreihe 31, die an einer Mitnahmelasche 32 eines Klemmsegments 9 vorgesehen ist. Die Mitnehmerlasche 32 weist darüber hinaus eine zusätzliche Zahnreihe 33 auf, die mit einem Zahnrad 34 in Eingriff steht. Von dem Zahnrad 34 wird die Bewegung in ein diametral zum Klemmsegment 9 angeordnetes Klemmsegment 8 übertragen, welches zu diesem Zweck mit einer an dessen Mitnehmerlasche 35 vorgesehenen Zahnreihe 35a versehen ist. In diesem Ausführungsbeispiel wird somit ein Klemmsegment 9 direkt über das Zahnsegment 30 des Wippelements 11 angetrieben, während das andere Klemmsegment 8 über das Zahnrad 34 indirekt von dem Klemmsegment 9 angetrieben wird. Das Zahnrad 34 ist so angeordnet, dass seine Drehachse mit der Deckelachse 4a des Druckdeckels 1 zusammenfällt.

Den beiden Klemmsegmenten 8 und 9 sind jeweils Sperrfedern 19 beziehungsweise 20 zugeordnet, deren Federkraft sie in Richtung der Sperrposition S aufeinander zu spannt.

Um auch die Entsperrposition E zu stabilisieren, dass heißt, den auseinander bewegten Klemmsegmenten 8 und 9 eine stabile Entsperrposition E zu verleihen, ist eine so genannte Endlagenfeder 36 vorgesehen. Ohne diese Maßnahme würden die Klemmsegmente 8 und 9 stets von den Sperrfedern 19 und 20 aufeinander zu bewegt. Die Endlagenfeder 36 ist jedoch so ausgelegt, dass sie den Sperrfedern 19 und 20 widerstehen kann. Im vorliegenden Ausführungsbeispiel ist die Endlagenfeder 36 eine Zugfeder.

Die Endlagenfeder 36 kann das Wippblatt 29 in seiner Endlage A halten, welche mit der Sperrposition S der Klemmsegmente 8 und 9 korrespondiert. Insbesondere gewährleistet die Endlagenfeder 36 aber auch, das Wippblatt 29 in der Endlage B zu halten, welche mit der Entsperrposition E der Klemmsegmente 8 und 9 korrespondiert. Da in der Entsperrposition E stets die Sperrfedern 19 und 20 wirken, welche die Klemmsegmente 8 und 9 aufeinander zu spannen, muss die Endlagenfeder 36 in der Lage sein, dass Wippblatt 29 gegen den Druck der Sperrfedern 19 und 20 in der Endlage B zu halten.

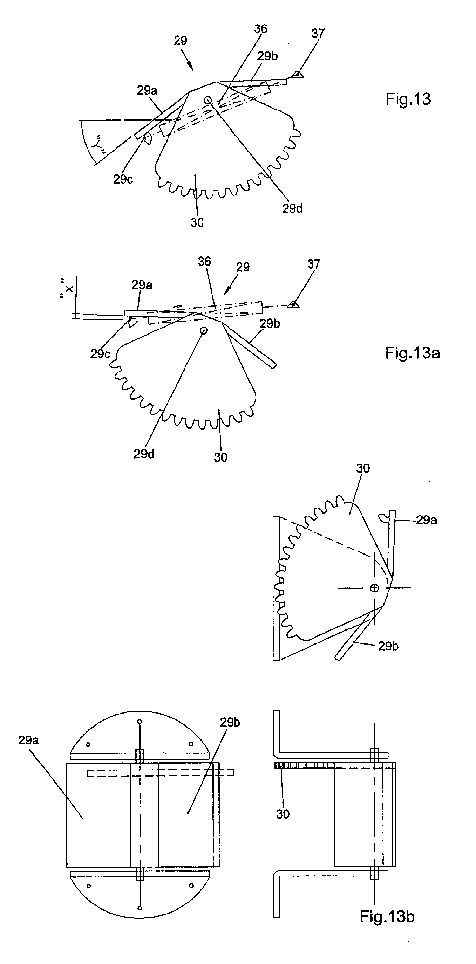

Das Wippblatt 29 ist in den Figuren 13, 13a und 13b von mehreren Seiten betrachtet in mehreren Ansichten dargestellt. Es weist einen V-förmigen Querschnitt auf. Zwei Schenkel 29a und 29b des Wippblatts 29 schließen einen Winkel von ca. 135° ein. Es ist eine Drehachse 29d zur Lagerung des Wippelements 29 vorgesehen und an einer Stirnseite ist das Wippblatts 29 mit dem Zahnradsegment 30 versehen.

Dieselbe Stirnseite ist am Schenkel 29a mit einer Verbindungsstelle 29c versehen, an der ein Ende der Endlagenfeder 36 angebracht ist. Das andere Ende der Endlagenfeder 36 ist an einem Fixpunkt 37 des Griffelements 5 angebracht.

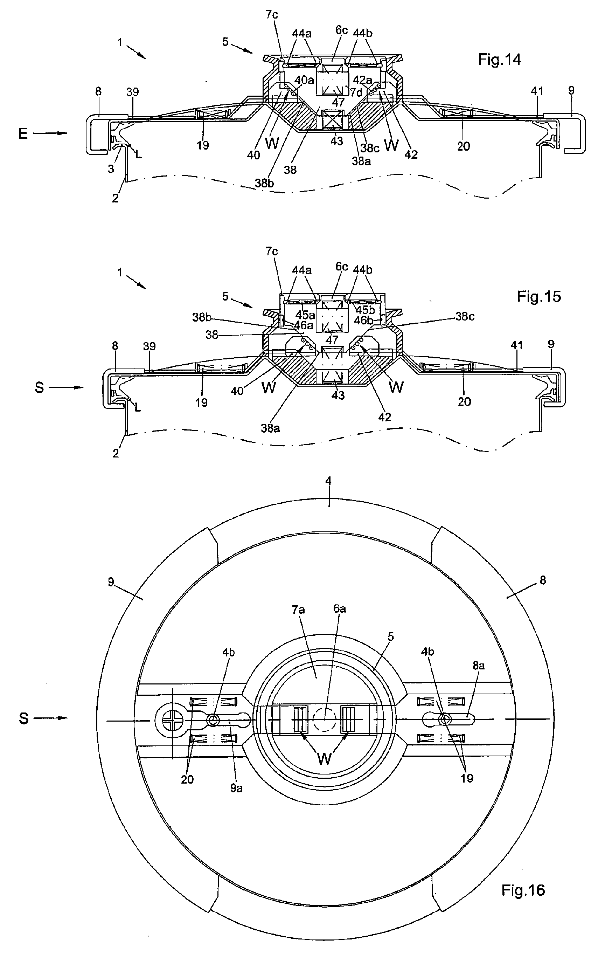

Ein weiteres Ausführungsbeispiel eines Druckdeckels 1 mit einem anderen mechanischen Funktionsprinzip ist gemäß den Figuren 14 bis 16 dargstellt. Wiederum ist auch ein zu dem Druckdeckel 1 passender Kochtopf 2 ausschnittsweise dargestellt. Das Ausführungsbeispiel beruht auf dem Prinzip, schiefe Ebenen zu verwenden, um die Richtung einer Bewegung umzulenken.

Fig. 14 zeigt den Druckdeckel in einer Entsperrposition E, dass heißt mit auseinander bewegten Klemmsegmenten 8 und 9. Der Druckdeckel 1 kann in dieser Entsperrposition E von dem Kochtopf 2 abgehoben werden. Auch hier sind Sperrfedern 19 und 20 vorgesehen, welche die Klemmsegmente 8 und 9 aufeinander zu spannen.

Wesentlicher Bestandteil ist ein als Antriebselement vorgesehener Antriebskeil 38 der Getriebebaugruppe 10. Der Antriebskeil 38 ist konzentrisch zur Deckelachse 4a in einem Griffelement 5 gelagert. Das Griffelement 5 ist an der Oberseite einer Deckelscheibe 4 des Druckdeckels 1 vorgesehen. Ein verjüngtes Ende 38a des Antriebskeils 38 weist in Richtung des Kochtopfes 2, wenn dieser dampfdicht verschlossen ist.

An der dem Kochtopf 2 abgewandten Seite ist an dem Antriebskeil 38 ein Entsperrknopf 7a vorgesehen, der eine ringförmige Betätigungsfläche 7c aufweist. Im vorliegenden Ausführungsbeispiel ist der Entsperrknopf 7a einstückig mit dem Antriebskeil 38 ausgebildet. Außerdem ist innerhalb der ringförmigen Betätigungsfläche 7c eine zentrale Betätigungsfläche 6c eines Sperrknopfes 6a vorgesehen, auf den noch näher einzugehen ist.

Das Klemmsegment 8 weist eine Mitnehmerlasche 39 auf, an deren Ende ein Gleitelement 40 vorgesehen ist. Das Klemmsegment 9 ist mit einer Mitnehmerlasche 41 versehen, welche an ihrem Ende ein Gleitelement 42 aufweist. Die Mitnehmerlaschen 39 und 41 reichen bis in das Griffelement 5 hinein, so dass sich die beiden Gleitelemente 40 und 42 innerhalb des Griffelements 5 befinden. Das Gleitelement 40 ist mit einer Schrägfläche 40a versehen, die mit einer Schrägfläche 38b des Antriebskeils 38 zusammenwirkt. Gleichermaßen ist das Gleitelement 42 mit einer Schrägfläche 42a versehen, welche mit einer Schrägfläche 38c des Antriebskeils 38 zusammenwirkt.

Um einen geschlossenen Kochtopf 2 zu öffnen, müssen die Klemmsegmente 8 und 9, wie bei allen anderen Ausführungsbeispielen aus der in Fig. 15 gezeigten Sperrposition S in die in Fig. 14 gezeigte Entsperrposition E auseinanderbewegt werden. Dies ist bewerkstelligt worden, indem der Benutzer auf die Betätigungsfläche 7c des Entsperrknopfs 7a gedrückt hat. Dadurch ist der Antriebskeil 38 in Richtung des Kochtopfes 2 bewegt worden. Wenn der Antriebskeil 38 in Richtung der Deckelachse 4a zum Kochtopf 2 gedrückt wird, schiebt er die Gleitelemente 40 und 42 in Querrichtung, also radial zur Deckelachse 4a auseinander, bis diese ihre Entsperrposition E erreicht haben.

Dabei muss für die Bewegung des Antriebskeils 38 die Federkraft der Sperrfedern 19 und 20 überwunden werden, welche die Klemmsegmente 8 und 9 aufeinander zu spannen.

Gleichzeitig muss eine weitere Federkraft überwunden werden. Diese wird von einer Gegendruckfeder 43 erzeugt, die auf der Deckelscheibe 4 abgestützt ist und gegen das verjüngte Ende 38a des Antriebskeils 38 drückt. Auch diese Gegendruckfeder 43 wird während der Entsperrbewegung vorgespannt.

Sobald die Klemmsegmente 8 und 9 ihre Entsperrposition E erreicht haben und die Vorwärtsbewegung des Antriebskeils 38 stoppt, tritt eine Blockiereinrichtung 44 in Aktion, welche die Position des Antriebskeils 38 arretiert. Die Blockiereinrichtung 44 weist Rastorgane 44a und 44b auf, die jeweils in einer Radialbohrung des Entsperrknopfes 7a verschiebbar aufgenommen und von einer Rastfeder 45a und 45b beaufschlagt sind. Je ein Rastorgan 44a und 44b wirkt mit einer passenden Ausnehmung 46a beziehungsweise 46b zusammen, die an einer

Innenwand des Griffelements 5 vorgesehen sind.

Um die Blockiereinrichtung 44 lösen zu können, wird der oben erwähnte zentrale Knopf mit der Betätigungsfläche 6c benötigt. Dieser zentrale Knopf bildet gleichzeitig das Betätigungsorgan, das die Sperrbewegung auslöst, damit die Klemmsegmente 8 und 9 aus ihrer Entsperrposition E in die Sperrposition S aufeinander zu bewegt werden. Der zentrale Knopf kann somit als Sperrknopf 6a bezeichnet werden.

Der Sperrknopf 6a ist in einer zentralen Ausnehmung 7d des Entsperrknopfs 7a aufgenommen und gegen eine in der Ausnehmung 7d angeordneten Druckfeder 47 abgestützt.

Weiterhin weist der Sperrknopf 6a einen Umfangsbereich mit einer kegelstumpfförmigen Fläche auf, welche gemäß Fig. 14 mit einem der Rastorgane 44a beziehungsweise 44b in Kontakt steht. Die Druckfeder 47 übt eine Federkraft auf den Sperrknopf aus und drückt ihn von der Deckelscheibe 4 weg. Dadurch drückt der kegelstumpfförmige Bereich des Sperrknopfes 6a gegen die radial angeordneten Rastorgane 44a und 44b und arretiert auf diese Weise die niedergedrückte Position des Entsperrknopfes 7a. Auf diese Weise ist die Entsperrposition E der Klemmsegmente 8 und 9 gesichert.

Fig. 15 zeigt die Sperrposition S der Klemmsegmente 8 und 9. Diese umgreifen den Umfangsrand 3 des Kochtopfes 2 und schließen ihn dampfdicht. Die Position ist erreicht worden, in dem der Benutzer auf den Sperrknopf 6a gedrückt hat. Dadurch ist der kegelstumpfförmige Bereich 6d des Sperrknopfes 6a gegen die Kraft der Druckfeder 47 tiefer in die Ausnehmung 7d des Entsperrknopfes 7a gedrückt worden und ein verjüngter Bereich 6e des Sperrknopfes 6a ist auf das Niveau die Rastorgane 44a und 44b gelangt. Auf diese Weise konnten sich die Rastfedern 45a und 45b entspannen und der Entsperrknopf 7a mit dem Antriebskeil 38 wieder nach oben zurückweichen. Die Kraft welche den Antriebskeil 38 nach oben drückt, resultiert aus der Federspannung der Gegendruckfeder 43. Diese war zuvor durch das Niederdrücken des Antriebskeils 38 vorgespannt worden. Hinzu kommt die Federkraft der Sperrfedern 19 und 20, welche die Klemmsegmente 8 und 9 mit den Gleitelementen 40 und 42 aufeinander zu bewegen und durch die Umlenkung mittels der Schrägflächen 38b und 38c ebenfalls im Resultat den Antriebskeil 38 aufwärts bewegen.

Fig. 16 zeigt eine Draufsicht auf die geschlossene Position, dass heißt auf die Sperrposition S der Klemmsegmente 8 und 9, welche den Druckdeckel 4 an den Umfangsrand 3 des Kochtopfes 2 festlegen. In der Draufsicht sind drei Wälzkörper W dargestellt, welche jeweils zwischen der Schrägfläche 38b des Antriebskeils 38 und einer Schrägfläche 40a des Gleitelements 40 angeordnet sind, um die Reibung zu vermindern. Gleichermaßen sind Wälzkörper W zwischen der Schrägfläche 38c des Antriebskeils 38 und einer Schrägfläche 42a des Gleitelements 42 angeordnet.

In den Figuren 14 und 15 sind die Wälzkörper W ebenfalls dargestellt.

### Bezugszeichenliste

- 1: Druckdeckel
- 1a: Innenseite
- 2: Kochtopf
- 3: Umfangsrand
- 4: Deckelscheibe
- 4a: Deckelachse
- 4b: Führungsbolzen
- 5: Griffelement
- 6: Sperrorgan
- 6a: Sperrknopf
- 6b: Zähne
- 6c: Betätigungsfläche
- 7: Entsperrorgan
- 7a: Entsperrknopf
- 7b: Zähne
- 7c: Betätigungsfläche
- 7d: Ausnehmung
- 8: Klemmsegment
- 8a: Gleitnut
- 9: Klemmsegment
- 9a: Gleitnut
- 10: Getriebebaugruppe
- 11: Wippelement
- 11a: Zylindersegment
- 11b: Längsachse
- 12: Führungsnut
- 12a: Endbereich
- 12b: Endbereich
- 13: Führungsnut
- 13a: Endbereich
- 13b: Endbereich
- 14: Längsachse
- 15: Mitnahmebolzen
- 16: Mitnahmebolzen
- 17: Betätigungskante
- 18: Betätigungskante
- 19: Sperrfeder
- 20: Sperrfeder
- 21: Tastfeder
- 22: Tastfeder
- 23: Steg
- 24: Steg
- 25: Vollzylinder
- 26: Öffnung
- 27: Öffnung
- 28: Kopplung
- 28a: Zahnrad
- 29: Wippblatt
- 29a: Schenkel
- 29b: Schenkel
- 29c: Verbindungsstelle
- 30: Zahnradsegment
- 31: Lochreihe
- 32: Mitnehmerlasche
- 33: Zahnreihe
- 34: Zahnrad
- 35: Mitnehmerlasche
- 35a: Zahnreihe
- 36: Endlagenfeder
- 37: Fixpunkt
- 38: Antriebskeil
- 38a: verjüngtes Ende
- 38b: Schrägfläche
- 38c: Schrägfläche
- 39: Mitnehmerlasche
- 40: Gleitelement
- 40a: Schrägfläche
- 41: Mitnehmerlasche
- 42: Gleitelement
- 42a: Schrägfläche
- 43: Gegendruckfeder
- 44: Blockiereinrichtung
- 44a: Rastorgan
- 44b: Rastorgan
- 45a: Feder
- 45b: Feder
- 46a: Ausnehmung
- 46b: Ausnehmung
- 47: Druckfeder
- A: Endlage
- B: Endlage
- E: Entsperrposition
- L: Lippendichtung
- N: Neutralposition
- S: Sperrposition
- W: Wälzkörper

## Patentansprüche

1. Druckdeckel (1) für einen Kochtopf (2) umfassend eine Deckelscheibe (4), ein Griffelement (5), Klemmsegmente (8, 9), die einander gegenüberliegend an der Deckelscheibe (4) angeordnet sind, wobei die Klemmsegmente (8, 9) radialbeweglich zur Achse (4a) der Deckelscheibe (4) (Deckelachse) zwischen einer Sperrposition (S) und einer Entsperrposition (E) bewegbar ist, ein erstes Betätigungsorgan 6 (Sperrorgan) zum Antrieb einer Sperrbewegung der Klemmsegmente (8, 9), ein zweites Betätigungsorgan (7) (Entsperrorgan) zum Antrieb einer Entsperrbewegung der Klemmsegmente (8, 9), sowie eine Getriebebaugruppe (10), über welche die Betätigungsorgane (6, 7) kinematisch mit den Klemmsegmenten (8, 9) gekoppelt sind, **dadurch gekennzeichnet, dass** das erste Betätigungsorgan (6) und das zweite Betätigungsorgan (7) nebeneinander an dem Griffelement (5) angeordnet sind, und dass beide Betätigungsorgane (6, 7) in einer Richtung parallel zur Deckelachse (4a) bewegbar in dem Griffelement (5) gelagert sind.

2. Druckdeckel nach Anspruch 1, **dadurch gekennzeichnet, dass** die Getriebebaugruppe (10) ein Antriebselement aufweist, das zwischen zwei Endlagen (A, B) bewegbar ist, wobei das Antriebselement so gestaltet ist, dass seine Antriebsbewegung mittels formschlüssigen Eingriffs der Klemmsegmente (8, 9) mit dem Antriebselement in eine translatorische Sperr- beziehungsweise Entsperrbewegung der Klemmsegmente (8, 9) umwandelbar ist.

3. Druckdeckel nach Anspruch 2, **dadurch gekennzeichnet, dass** das Antriebselement der Getriebebaugruppe (10) als Wippelement (11) ausgebildet ist.

4. Druckdeckel nach Anspruch 3, **dadurch gekennzeichnet, dass** das Wippelement (11) als Zylindersegment (11a) ausgebildet ist.

5. Druckdeckel nach Anspruch 3, **dadurch gekennzeichnet, dass** das Wippelement (11) als Vollzylinderwippe ausgebildet ist, und dass der Vollzylinder (25) mit einem Angriffsbereich für das erste Betätigungsorgan (6) und einem Angriffsbereich für das zweite Betätigungsorgan (7) versehen ist.

6. Druckdeckel nach Anspruch 3, **dadurch gekennzeichnet, dass** das Wippelement (11) als Wippblatt (29) ausgebildet ist.

7. Druckdeckel nach Anspruch 6, **dadurch gekennzeichnet, dass** das Wippblatt (29) mit einem integrierten Zahnrad beziehungsweise Zahnradsegment (30) versehen ist.

8. Druckdeckel nach einem der Ansprüche 3 bis 7, **dadurch gekennzeichnet, dass** dem Wippelement eine Endlagenfeder (36) zugeordnet ist, mit der zwei Endlagen (A, B) des Wippelements (11, 29) gesichert sind, wobei zwischen beiden Endlagen (A, B) eine labile Gleichgewichtsposition des endlagengefederten Wippelements (11, 29) existiert.

9. Druckdeckel nach einem der Ansprüche 3 bis 8, **dadurch gekennzeichnet, dass** eine formschlüssige Kopplung (28) vorgesehen ist, die eine kinematische Verbindung zwischen dem Sperrorgan (6a) und dem Entsperrorgan (7a) schafft.

10. Druckdeckel nach Anspruch 2, **dadurch gekennzeichnet, dass** das Antriebselement der Getriebebaugruppe (10) einen Antriebskeil (38) aufweist, der mit zwei Schrägflächen (38b, 38c) versehen ist, und dass jede Schrägfläche (38b, 38c) mit einer an dem jeweiligen Klemmsegment (8, 9) vorgesehenen Schrägfläche (40a, 42a) zusammenwirkt.

11. Druckdeckel nach Anspruch 10, **dadurch gekennzeichnet, dass** Wälzkörper (W) zwischen jeder Schrägfläche (38b, 38c) des Antriebskeils (38) und den zugeordneten Schrägflächen (40a, 42a) der Klemmsegmente (8, 9) angeordnet sind.

12. Druckdeckel nach einem der Ansprüche 10 oder 11, **dadurch gekennzeichnet, dass** dem Entsperrorgan (7a) eine Gegendruckfeder (43) zugeordnet ist, und dass eine Blockiereinrichtung (44) vorgesehen ist, mit der das Entsperrorgan (7a) im gespannten Zustand der Gegendruckfeder (43) arretierbar ist.

13. Druckdeckel nach einem der Ansprüche 1 bis 12, d ad u r c h **gekennzeichnet** , dass eine Sperrfeder (19, 20) zur Unterstützung der Sperrbewegung der Klemmsegmente (8, 9) vorgesehen ist.

14. Druckdeckel nach einem der Ansprüche 1 bis 13, **dadurch gekennzeichnet, dass** eine Tastfeder (21, 22) vorgesehen ist, mit der das Sperrorgan (6a) beziehungsweise das Entsperrorgan (7a) nach jeder Betätigung in eine Neutralposition (N) bewegbar ist.

15. Kochtopf mit einem Druckdeckel (1) gemäß einem der Ansprüche 1 bis 14.

## Claims

1. Pressure lid (1) for a cooking pot (2), comprising a lid disc (4), a gripping element (5), clamping segments (8, 9) disposed opposite one another on the lid disc (4), wherein the clamping segments (8, 9) are radially movable relative to the axis (4a) of the lid disc (4) (lid axis) between a locked position (S) and an unlocked position (E), a first actuating member (6) (locking member) for driving a locking movement of the clamping segments (8, 9), a second actuating member (7) (unlocking member) for driving an unlocking movement of the clamping segments (8, 9), and a gear assembly (10) by means of which the actuating members (8, 9) are coupled kinematically to the clamping segments (8, 9), **characterized in that** the first actuating member (6) and the second actuating member (7) are disposed adjacent to one another on the gripping element (5), and both actuating members (6, 7) are mounted in the gripping element (5) so as to be movable in a direction parallel to the lid axis (4a).

2. Pressure lid according to claim 1, **characterized in that** the gear assembly (10) includes a driving element movable between two end positions (A, B), wherein the driving element is configured in such a manner that its driving movement can be transformed into a translational locking or unlocking movement of the clamping segments (8, 9) by means of a positive engagement of the clamping segments (8, 9) with the driving element.

3. Pressure lid according to claim 2, **characterized in that** the driving element of the gear assembly (10) is formed as a rocker element (11).

4. Pressure lid according to claim 3, **characterized in that** the rocker element (11) is formed as a cylinder segment (11a).

5. Pressure lid according to claim 2, **characterized in that** the rocker element (11) is formed as a plain-cylinder rocker and that the plain cylinder (25) is provided with a contact area for the first actuating member (6) and a contact area for the second actuating member (7).

6. Pressure lid according to claim 3, **characterized in that** the rocker element (11) is formed as a leaf-type rocker (29).

7. Pressure lid according to claim 6, **characterized in that** the leaf-type rocker (29) is provided with an integrated gear or gear segment (30).

8. Pressure lid according to one of the claims 3 to 7, **characterized in that** a final position spring (36) is associated with the rocker element, by which spring two end positions (A, B) of the rocker element are secured, wherein an instable equilibrium position of the end position spring-loaded rocker element (11, 29) exist between the two end positions (A, B).

9. Pressure lid according to one of the claims 3 to 8, **characterized in that** a positive coupling (28) is provided, which provides a kinematic connection between the locking member (6a) and the unlocking member (7a).

10. Pressure lid according to claim 2, **characterized in that** driving element of the gear assembly (10) includes a driving key (38) having two inclined surfaces (38b, 38c) and that each inclined surface (38b, 38c) cooperates with an inclined surface (40a, 42a) provided on the respective clamping segment (8, 9)

11. Pressure lid according to claim 10, **characterized in that** the rolling bodies (W) are arranged between each inclined surface (38b, 38c) of the driving key (38) and the associated inclined surfaces (40a, 42a) of the clamping segments (8, 9).

12. Pressure lid according to one of the claims 10 or 11, **characterized in that** a counter-pressure spring (43) is associated with the unlocking member (7a) and that a blocking device (44) is provided with which the unlocking member (7a) can be locked with the counter-pressure spring in its tensioned state.

13. Pressure lid according to one of the claims 1 to 12, **characterized in that** there is provided a locking spring (19, 20) for supporting the locking movement of the clamping segments (8, 9).

14. Pressure lid according to one of the claims 1 to 13, **characterized in that** a touch spring (21, 22) is provided with which the locking member (6a) respectively the unlocking member (7a) can be moved to a neutral position (N) after each actuation.

15. Cooking pot with a pressure lid (1) according to one of the claims 1 to 14.

## Revendications

1. Couvercle à pression (1) pour une marmite de cuisson (2) comprenant un disque de couvercle (4), un élément de poignée (5), des segments de serrage (8, 9) disposés l'un vis à vis l'autre sur le disque de couvercle (4), segments de serrage (8, 9) qui sont mobiles radialement par rapport à l'axe (4a) du disque de couvercle (4) (axe de couvercle) entre une position verrouillée (S) et une position déverrouillée (E), et comprenant un premier organe de manoeuvre (6) (organe de verrouillage) pour la commande d'un mouvement de verrouillage des segments de serrage (8, 9), un deuxième organe de manoeuvre (7) (organe de déverrouillage) pour la commande d'un mouvement de déverrouillage des segments de serrage (8, 9) ainsi qu'un module d'entraînement (10) par lequel les organes de manoeuvre (6, 7) sont couplés de manière cinématique aux segments de serrage (8, 9), **caractérisé en ce que** le premier organe de manoeuvre (6) et le deuxième organe de manoeuvre (7) sont juxtaposés sur l'élément de poignée (5) et **en ce que** les deux organes de manoeuvre (6, 7) sont logés dans l'élément de poignée de manière mobile dans une direction parallèle par rapport à l'axe de couvercle (4a).

2. Couvercle à pression selon la revendication 1, **caractérisé en ce que** le module d'entraînement (10) comporte un élément de commande déplaçable entre deux positions finales (A, B), ledit élément de commande étant formé de sorte que son mouvement d'entraînement peut être transformé en un mouvement translationnel de verrouillage ou de déverrouillage des segments de serrage (8, 9) par l'engagement positif des segments de serrage avec l'élément de commande.

3. Couvercle à pression selon la revendication 2, **caractérisé en ce que** l'élément de commande du module d'entraînement (10) est en forme d'un élément basculant (11).

4. Couvercle à pression selon la revendication 3, **caractérisé en ce que** l'élément basculant (11) est formé comme un élément de cylindre (11a).

5. Couvercle à pression selon la revendication 3, **caractérisé en ce que** l'élément basculant (11) est formé comme un cylindre plein et **en ce que** le cylindre plein (25) est pourvu d'une partie d'attaque pour le premier organe de manoeuvre (6) et d'une partie d'attaque pour le deuxième organe de manoeuvre (7).

6. Couvercle à pression selon la revendication 3, **caractérisé en ce que** l'élément basculant (11) est formé comme une lame basculante (29).

7. Couvercle à pression selon la revendication 6, **caractérisé en ce que** la lame basculante (29) est pourvue d'une roue dentée intégrée respectivement d'un segment de roue dentée (30).

8. Couvercle à pression selon l'une quelconque des revendications 3 à 7, **caractérisé en ce qu'**un ressort fin de course (36) est associé à l'élément basculant, par lequel ressort fin de course sont garanties deux positions finales (A, B) de l'élément basculant (11, 29), une position d'équilibre instable de l'élément basculant (11, 29) à ressorts de fin course existant entre les deux positions finales (A, B).

9. Couvercle à pression selon l'une quelconque des revendications 3 à 8, **caractérisé en ce qu'**un couplage positif (28) est prévu qui produit une connexion cinématique entre l'organe de verrouillage (6a) et l'organe de déverrouillage (7a).

10. Couvercle à pression selon la revendication 2, **caractérisé en ce que** l'élément de commande du module d'entraînement (10) comporte une clavette de commande (38) pourvue de deux surfaces inclinées (38b, 38c) et **en ce que** chacune surface inclinée (38b, 38c) coopère avec une surface inclinée (40a, 42a) prévue sur l'élément de serrage (8, 9) respectif.

11. Couvercle à pression selon la revendication 10, **caractérisé en ce que** des rouleaux (W) sont disposés entre chacune des surfaces inclinées (38b, 38c) de la clavette de commande (38) est les surfaces inclinées (40a, 42) associées des éléments de serrage (8, 9).

12. Couvercle à pression selon l'une quelconque des revendications 10 ou 11, **caractérisé en ce qu'**un ressort de contre-pression (43) est associé à l'organe de déverrouillage (7a) et **en ce qu'**est prévu un dispositif de blocage (44) par lequel l'orange de déverrouillage (7a) peut être arrêté dans l'état tendu du ressort de contre-pression (43).

13. Couvercle à pression selon l'une quelconque des revendications 1 à 12, **caractérisé en ce qu'**un ressort de blocage (19, 20) est prévu pour aider le mouvement verrouillant des segments de serrage (8, 9).

14. Couvercle à pression selon l'une quelconque des revendications 1 à 13, **caractérisé en ce qu'**est prévu un ressort-poussoir (21, 22) par lequel ressort-poussoir l'organe de verrouillage (6a) respectivement l'organe de déverrouillage (7a) peuvent être mus dans une position neutre (N) après chaque actionnement.

15. Marmite de cuisson avec un couvercle à pression (1) selon l'une quelconque des revendications 1 à 14.
